Europäisches Patentamt

European Patent Office

Office européen des brevets

(11) Publication number: **0 069 381**
**B1**

(12) **EUROPEAN PATENT SPECIFICATION**

(45) Date of publication of patent specification: **13.11.85**

(51) Int. Cl.⁴: **H 01 S 3/10**

(21) Application number: **82106001.9**

(22) Date of filing: **05.07.82**

(54) Laser device having laser beam energy control.

(30) Priority: **06.07.81 JP 105318/81**

(43) Date of publication of application:
**12.01.83 Bulletin 83/02**

(45) Publication of the grant of the patent:
**13.11.85 Bulletin 85/46**

(84) Designated Contracting States:
**DE FR GB SE**

(56) References cited:
**US-A-3 806 829**

**INSTRUMENTS AND EXPERIMENT. TECHN.,
vol. 22, no. 3, part 2, May/June 1979, pages
855-856, New York, USA S.I. GRINYUK et al.:
"Synchronization of an LG-36A laser with an
SFR-2M camera"**

(73) Proprietor: **SUMITOMO ELECTRIC INDUSTRIES
LIMITED
No. 15, Kitahama 5-chome Higashi-ku
Osaka-shi Osaka-fu (JP)**

(72) Inventor: **Hiramoto, Junichi c/o Osaka Works
Sumitomo Electric Industries Ltd. No. 1-3
Shimaya 1-chome Konohana-ku Osaka (JP)**
Inventor: **Takenaka, Shinya c/o Osaka Works
Sumitomo Electric Industries Ltd. No. 1-3
Shimaya 1-chome Konohana-ku Osaka (JP)**

(74) Representative: **Henkel, Feiler, Hänzel & Partner
Möhlstrasse 37
D-8000 München 80 (DE)**

Courier Press, Leamington Spa, England.

## Description

Background of the invention

The present invention relates to a laser device equipped with laser beam energy control.

There have been various laser devices for generating laser beam for use in medical apparatuses and/or machine tools and there have been known various pulse controlled laser devices capable of controlling laser beam according to pulse oscillation condition. The control in such conventional laser device, however, includes a mere regulation of a pulse width or pulse repetitive period and the laser beam is controlled by a single pulse having variable width or a infinitely continuous, fixed with pulse signal having variable pulse period. From US—A— 3 806 829 a laser device is known having a pulse controlled laser oscillator comprising means for setting the pulse period and generating a control pulse signal having the set pulse period to control said laser oscillator to thereby control the laser beam energy. That is, for the laser device driven by a single pulse, it may be possible to control the total energy of laser beam by setting the width thereof. On the contrary, for the laser device which is controlled by infinitely continuous pulse signal and which is now becoming popular, the laser beam is controlled by terminating the generation of the continuous pulse signal after a predetermined number of pulses or by blocking the laser beam itself optomechanically. However, since the pulse width is usually less than several hundreds milliseconds, it is impossible to exactly count such pulses manually. Therefore, in the conventional laser device, it is impossible to control total laser beam energy to a desired amount. Particularly, for a laser application to medical devices such as laser surgical knife, it is very important to exactly control the total laser beam energy in view of protection of human body under operation.

Summary of the invention

An object of the present invention is to provide a laser device which has a laser oscillator which is controlled by a continuous wave pulse signal and is capable of controlling the total laser beam energy.

Brief description of the drawings

Fig. 1 is a block diagram of a laser device according to the present invention; and

Fig. 2 is a circuit diagram of a main portion of the present laser device.

Detailed description of the embodiment

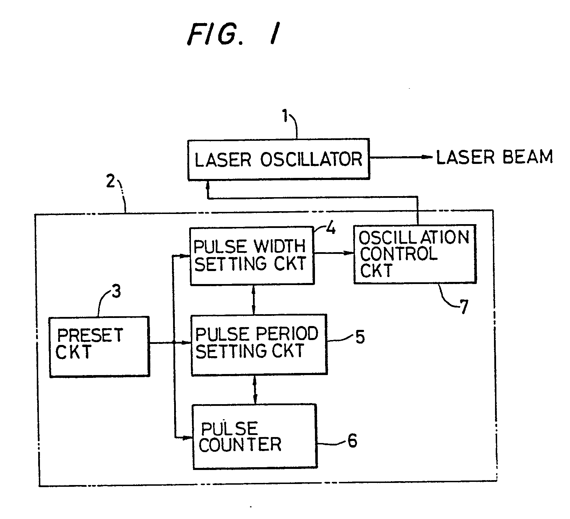

Fig. 1 is a block circuit diagram of a laser device according to the present invention. The laser device is composed of a laser oscillator 1 of the pulse controlled, continuous wave type and a pulse generating and pulse repetitive rate setting portion 2. The pulse generating and repetitive rate setting portion 2 includes a preset circuit 3, a pulse width setting circuit 4, a pulse period setting circuit 5, a pulse counter 6 and an oscillation control circuit 7.

The preset circuit 3 is connected to the pulse width setting circuit 4, a pulse period setting circuit 5 and the pulse counter 6 to set the pulse width, the pulse period and the definite number of pulses required to produce a desired amount of beam energy.

The pulse width setting circuit 4 comprises a timer which sends pulses having a preset time width to the oscillation control circuit 7. The pulse period setting circuit 5 comprises a timer which sets the pulse width timer 5 every preset time period. The pulse counter 6 counts pulses from the pulse width timer 4 or the pulse period timer 5 and when a predetermined number of pulses are counted, it resets the pulse period timer 5. The oscillation control circuit 7 sends repetitive pulse signal having desired repetitive rate, pulse period and pulse width to the laser oscillator 1 in synchronism with the basic clock pulse signal. The oscillation control circuit 7 may be replaced by a chopper provided on the way of laser path.

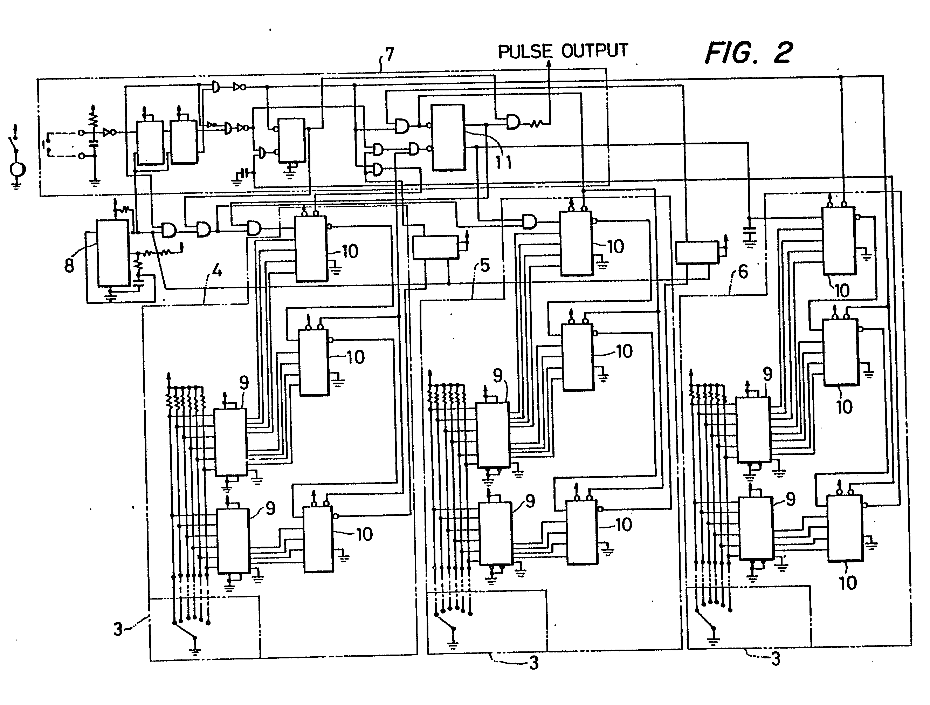

Fig. 2 is an embodiment of the circuit construction of the repetitive pulse setting and generating portion 2 of the present laser device. In this embodiment, the pulse period timer is replaced by a pulse interval timer 5. Reference numerals 8, 9, 10 and 11 depict a basic clock circuit, a driver, a preset counter and a D type flip-flop, respectively, and 3 to 7 depict the same components as those in Fig. 1. The basic clock circuit 8 comprises a timer IC which generates a clock pulse signal. The pulse width timer 4 and the time interval timer 5 operate in synchronism with the clock pulse signal. The preset counter 10 of the pulse width timer 4 is preset by the driver 9 so that it counts a predetermined number of clock pulses for determining the pulse width. Similarly, the preset counter 10 of the pulse interval timer 5 is preset so as to count a predetermined number of clock pulses necessary to determine a pulse interval between adjacent pulses.

The pulse width timer 4 and the pulse interval timer 5 provide inputs to the D type flip-flop 11 of the oscillation control circuit 7 when they complete their predetermined counting 5, respectively. That is, the output of the D type flip-flop 11 changes upon a leading or trailing edge of one pulse. The up/down counter 10 of the pulse counter 6 counts either the leading or trailing edges of the predetermined number of clock pulses under control of the output of the D type flip-flop 11 and resets the pulse interval timer 5, when the counting is completed, to stop the supply of repetitive pulse output of the oscillation control circuit 7 to the laser oscillator 1. In this manner, according to the laser device of this invention, it is possible to regulate the number of pulses to be sent to the laser oscillation 1. Therefore, it is possible to exactly control the total laser beam energy to be directed to the workpiece or the like.

## Claims

1. A laser device having a pulse controlled laser oscillator, comprising means for setting pulse width, pulse period and pulse number and generating a control pulse signal having the set pulse width, the set pulse period and the set pulse mumber, to control said laser oscillator to thereby control the total energy content of the emitted laser beam to a desired amount.

2. A laser device as claimed in claim 1, characterized by that said means includes a pulse width timer for determining the pulse width, a pulse period timer for determining the pulse period and resetting said pulse width timer every pulse period.

3. A laser device as claimed in claim 2, characterized by further comprising a pulse counter responsive to a completion of counting a predetermined number of repetitive pulses from said pulse width timer or said pulse period timer to reset said pulse period timer and an oscillation control portion responsive to a pulse output of said pulse width timer to control said laser oscillator.

## Patentansprüche

1. Lasergerät mit einem impulsgesteuerten Laser-Oszillator, umfassend eine Einrichtung zum Einstellen von Impulsbreite, Impulsperiode und Impulszahl und (zum) Erzeugen eines Steuerimpulssignals mit der eingestellten Impulsbreite, der eingestellten Impulsperiode und der eingestellten Impulszahl zwecks Steuerung des Laser-Oszillators, um damit den Gesamtenergiegehalt des emittierten Laserstrahls auf eine gewünschte oder Soll-Größe zu regeln.

2. Lasergerät nach Anspruch 1, dadurch gekennzeichnet, daß die Einrichtung einen Impulsbreitenzeitgeber zur Bestimmung der Impulsbreite, (und) einen Impulsperiodenzeitgeber zur Bestimmung der Impulsperiode und zum Rücksetzen des Impulsbreitenzeitgebers in jeder Impulsperiode aufweist.

3. Lasergerät nach Anspruch 2, gekennzeichnet durch einen Impulszähler, der auf die Beendigung des Zählens einer vorbestimmten Zahl von sich wiederholenden Impulsen von Impulsbreitenzeitgeber oder Impulsperiodenzeitgeber zum Rücksetzen des Impulsperiodenzeitgebers anspricht, und einen auf ein Impulsausgangssignals des Impulsbreitenzeitgebers ansprechenden Schwingungssteuerabschnitt zur (An-)Steuerung des Laser-Oszillators.

## Revendications

1. Dispositif à laser ayant un oscillateur laser commandé par des impulsions, comprenant un dispositif de réglage de la largeur des impulsions, de la période des impulsions et du nombre d'impulsions et créant un signal pulsé de commande ayant la largeur réglée d'impulsions, la période réglée d'impulsions et le nombre réglé d'impulsions, afin qu'il commande l'oscillateur laser et commande ainsi le contenu énergétique total du faisceau laser émis à une quantité voulue.

2. Dispositif à laser selon la revendication 1, caractérisé en ce que ledit dispositif comporte une minuterie de largeur d'impulsions destinée à déterminer la largeur d'impulsions, une minuterie de période d'impulsions destinée à déterminer la période des impulsions et remettant à zéro la minuterie de largeur d'impulsion à chaque période d'impulsions.

3. Dispositif à laser selon la revendication 2, caractérisé en ce qu'il comprend en outre un compteur d'impulsions commandé par la fin du comptage d'un nombre prédéterminé d'impulsions répétitives provenant de la minuterie de largeur d'impulsions ou de la minuterie de période d'impulsions afin que la minuterie de période d'impulsions soit remise à zéro, et une partie de commande d'oscillation commandée par le signal pulsé de sortie de la minuterie de largeur d'impulsions et destinée à commander l'oscillateur laser.

*FIG. I*

LASER OSCILLATOR ————►LASER BEAM

PULSE WIDTH SETTING CKT

OSCILLATION CONTROL CKT

PRESET CKT

PULSE PERIOD SETTING CKT

PULSE COUNTER

FIG. 2